# EUROPEAN PATENT APPLICATION

(11) **EP 3 757 145 A2**
(43) Date of publication of application: **30.12.2020**
(21) Application number: 20204186.9
(22) Date of filing: 27.10.2020
(51) Int. Cl.: C08G 18/12, C08G 18/48, C08G 18/76

(54) **MICROCELLULAR POLYURETHANE ELASTOMERS**

(71) Applicant: BASF Polyurethanes GmbH, 49448 Lemförde (DE)
(72) Inventor:
(74) Representative: BASF IP Association

(57) **Abstract**

The invention is directed to a method for producing a shaped body comprising a polyurethane elastomer, comprising the steps of (i) providing a mixture (M1), comprising at least one prepolymer having isocyanate groups, wherein the prepolymer is obtained by reacting a polyol composition (ZP) and an isocyanate composition (ZI) comprising at least 1, 5-naphthalene diisocyanate (NDI) and 4.4' - diphenylmethane diisocyanate (MDI), at least one chain extender (KV); (ii) introducing of the mixture (M1) into a mold; (iii) heating the mixture (M1) in the mold to a temperature in the range of 140°C to 200°C to obtain one shaped body (F1); (iv) deforming the molded article (F1) to obtain a molded body precursor (V2); (v) treating the shaped body precursor (V2) at a temperature ranging from 170 °C to 235°C to obtain a molding (F2) comprising a polyurethane elastomer.

## Description

The present invention relates to a method for producing a molded article comprising a polyurethane elastomer, providing a mixture (M1), comprising at least one prepolymer having isocyanate groups and at least one chain extender (KV), the introduction of the mixture (M1) into a mold, heating the mixture (M1) in the mold to a temperature in the range of 140°C to 200°C to give one shaped body (F1); the release of the molded body (F1) to give a shaped body precursor (V2) and the treatment of the shaped body precursor (FV2) at a temperature of 170 °C to 210°C to give a shaped body (F2) comprising a polyurethane elastomer. The present invention further relates to a molded article, obtainable or obtained by such a method as well as the use of an inventive molded article as a damping element, shock absorber or as part of a shoe or a shoe sole bumper or, for example a insole or midsole.

Elastomers based on polyisocyanate polyaddition products and their preparation are well known and have been described widely, for example in EP-A 62 835, EP-A 36 994, EP-A 250 969, DE-A 195 48,770 and DE-A 195 48,771, EP 1, 379,568 B1. Known are compact and microcellular materials.

Moldings composed of microcellular polyurethane are often used as damping elements for automobiles, where they have to withstand high mechanical stress for years, and at the same time should have good resistance to hydrolysis. Also, their use as a shoe sole or a part of a shoe sole is known.

US 8,574,483 describes a method for producing damping elements with a two-step process. For many applications it is advantageous to produce shaped bodies having good damping properties cost-effective.

It was therefore an object of the present invention, to find a simple method for the production of molded bodies comprising polyurethane elastomers having the good mechanical and dynamic properties.

According to the invention this object is solved by a method for producing a shaped body comprising a polyurethane elastomer, at least comprising the steps of (i) to (v):
(i) providing a mixture (M1), comprising (a) at least one Prepolymer having isocyanate groups,
   wherein the Pre polymer is obtained by reacting a polyol composition (ZP) and an isocyanate
   composition (ZI) comprising at least 1, 5-naphthylene diisocyanate (NDI) and 4.4' - diphenylmethane diisocyanate (MDI),
   (b) at least one chain extender (KV);
(ii) the introduction of the mixture (M1) into a mold;
(iii) heating the mixture (M1) in the mold to a temperature in the range of 140°C to 200°C to give a shaped body (F1);
(iv) deformation of the molded body (F1) to give a shaped body precursor (V2);
(v) treating the molding precursor (V2) at a temperature in the range of 235°C to give a shaped body von170 °C to (F2) comprising a polyurethane elastomer.

According to a further aspect the present invention also relates to a molded article, the form body, obtainable or obtained by a method at least comprising the steps of (i) to (v):
(i) providing a mixture (M1), comprising
   (a) at least one Prepolymer having isocyanate groups, wherein the Pre polymer is obtained by reacting a polyol composition (ZP) and an isocyanate composition (ZI) comprising at least 1, 5-naphthylene diisocyanate (NDI) and 4.4' - diphenylmethane diisocyanate (MDI),
   (b) at least one chain extender (KV);
(ii) the introduction of the mixture (M1) into a mold;
(iii) heating the mixture (M1) in the mold to a temperature in the range of 140°C to 200°C to give one shaped body (F1);
(iv) deformation of the molded body (F1) to give a shaped body precursor (V2);
(v) treating the molding precursor (FV2) at a temperature in the range of 210°C to give a shaped body von170 °C to (F2) comprising a polyurethane elastomer.

The inventive method comprises at least the steps of (i) to (v). The method may also include further steps, for example further shaping steps or a temperature treatment. It has surprisingly been found, that by the method according to the invention shaped bodies of the polyurethane elastomers with good mechanical and dynamic properties can be produced.

According to step (i) of the invention, the mixture (M1) is provided, wherein the mixture (M1) comprise the components (a) and (b), wherein:
component (a) is at least one prepolymer having isocyanate groups, wherein the prepolymer is obtained by reacting a polyol composition (ZP) and an isocyanate composition (ZI) comprising at least 1, 5-naphthylene diisocyanate (NDI) and 4.4' - diphenylmethane diisocyanate (MDI), component (b) is at least one chain extender (KV).

It has been found, that by the use of an isocyanate composition, the 1, 5-naphthylene diisocyanate (NDI) and 4.4' - diphenylmethane diisocyanate (MDI) contains, microcellular polyurethane elastomers can be obtained, showing particularly good mechanical and dynamic properties. In the context of the present invention may the ratio of the isocyanates in the isocyanate composition may vary within wide ranges. In a preferred example the isocyanate composition (ZI) contains 1, 5-naphthylene (NDI) and 4.4' - diphenylmethane diisocyanate (MDI) in a ratio of 1 to 1 to 1 to 10, preferably in the ratio of 1 to 1 to 1 to 6 and more preferably in the ratio of 1 to 1 to 1 to 4.

According to a further embodiment the present invention relates to a method as described above, wherein the isocyanate composition (ZI) comprises 1, 5-naphthylene diisocyanate (NDI) and 4.4' - diphenylmethane diisocyanate (MDI) in a ratio of 1 to 1 to 1 to 10.

According to step (ii) the mixture (M1) is placed in a mold. In the context of the present invention any mold useable for the production of polyurethane elastomers can be used. Molds are the negative of the molded parts and any commonly used mold is possible, for example metal molds.

According to the invention the mixture (M1) can be produced directly during being introduced into the mold or prior to being introduced into the mold.

According to step (iii) the mixture (M1) is filled into the mold, is heated to a temperature in the range of 140°C to 200°C to give one shaped body (F1). The components of the mixture (M1) react in the mold and form a polyurethane elastomer. The mixture (M1) is filled into the mold in an amount corresponding to the desired densities of the molded parts. After 2 minutes to 60 minutes usually the molded articles are cured to the extent, that they can be removed from the mold.

Usually he shaped body (F1) is not fully cured, so that the molded body (F1) can be easily deformed.

According to step (iv) the molded article (F1) is formed to give a shaped body precursor (V2). This can take place in a suitable form. It is also possible, that only a portion of the shaped body (F1) is formed by selecting a suitable mold.

The thus obtained precursor (V2) is then treated according to step (v) at a temperature in the range of 170 °C to 210°C. In that way the molded body (F2) si obtained, comprising a polyurethane elastomer. The polyurethane elastomer preferably is microcellular.

The conditions for the forming and the treatment according to step (v) can vary in wide ranges. Preferably the treatment according to step (v) is preferably at a pressure in the range of 1 bar to 10 bar for a period of 1 hour to 48 hours.

The resulting shaped body is then removed from the mold.

The mixture (M1) contains the component (a) and the component (b), and further can include other components. In preferred examples the mixture (M1) further comprises a compound (V2) selected from flame retardants or dyes, or a mixture thereof.

The prepolymer and the chain extender (KV) are reacted, if appropriate with the addition of additional polyol or further chain extender, optionally catalyst, optionally blowing agents, optionally cross-linking agent, optionally auxiliary substances and/or additives.

Preferably the amount of the equivalence ratio of NCO groups to the sum of the reactive hydrogen atoms in the mixture (M1) is in the range of 0.8: 1 to 1, 5:1, preferably 1:1 to 1, 3:1 and in particular 1, 02:1 to 1, 15:1. A ratio of 1:1 is also referred to as an isocyanate index of 100. The isocyanate index is the stoichiometric ratio of isocyanate groups to isocyanate-reactive groups, multiplied by 100.

Chain extenders (KV) react with the isocyanate-terminated prepolymer.

It is preferred that the isocyanate-terminated prepolymer has an NCO content of 2 weight % to 20 weigth %. Preferably the isocyanate groups comprising prepolymer is obtained by reaction of the isocyanate composition (ZI) with the polyol composition (ZP).

The polyol composition (ZP) comprises at least one polyol. Are suitable in the context of the present invention also polyol compositions (ZP) containing a poly-ε-caprolactone polyol and an α-Hydro-ω- hydroxy poly (oxytetramethylene) polyol.

The polyol composition (ZP) preferably contains a poly-e-caprolactone polyol and an α-hydro-ω-hydroxy poly (oxytetramethylene) polyol and may include other components, particularly further isocyanate-reactive substances, for example further polyols, preferably polyethers, polyesters or polycarbonates.

Preferably poly-e-caprolactone polyol are used with a number average molecular weight in the range of 1.5 x 10³ g/mol to 2.5 x 10³ g/mol. Preferably form poly-ε-caprolactone diols are used, i.e. those poly-ε-caprolactone polyol, obtained or obtainable by using a difunctional starter are. In the context of the present invention suitable initiators are for example diols having a number-average molecular weight in the range of 80 g/mol to 1.5 x 10³ g/mol, preferable polyether polyols or polyester polyols. Especially suitable are polyether polyols, in particular long-chain such as for example α-hydro-ω- hydroxy poly (oxytetramethylene) polyol.

According to a further embodiment the present invention also relates to a method as described above, wherein the inserted poly-ε-caprolactone polyol is obtainable or obtained by reacting ε-caprolactone and an initiator molecule, selected from the group consisting of α-hydro-ω- hydroxy poly (oxytetramethylene) diols, polyethylene glycol and polypropylene glycol.

Suitable starter molecules are in particular selected from the group consisting of neo pentyl glycol (NPG), 1, 4-butanediol (BDO), 1, 6-hexanediol (HDO) and long-chain polyetherdiols having a number average molecular weight in the range of 0.8x10³ g/mol to 1.2x10³ g/mol, preferably from 0.9 x 10³ g/mol to 1,1 x 10³ g/mol.

The polyol composition (ZP) may also be α-hydro-ω- hydroxy poly (oxytetramethylene) polyol. Suitable α-hydro-ω- hydroxy poly (oxytetramethylene) polyols preferably have a number-average molecular weight in the range of 1.5 x 10³ g/mol to 2.5 x 10³ g/mol. Mixtures of two or more α-hydro-ω- hydroxy poly (oxytetramethylene) polyols with different molecular weights can be used as well.

The composition of the polyol composition (ZP) may vary in broad ranges. Preference is given in the context of the present invention the proportion of the α-hydro-ω- hydroxy poly (oxytetramethylene) polyol to the polyol composition (ZP) in the range of 0.1 weight % to 50 weight %, preferably in the range of 10 weight % to 35% weight %, particularly preferably in the range of 15 weight % to 25 weight %. According to a preferred embodiment the polyol composition (ZP) consists of the poly-e-caprolactone polyol and the α-hydro-ω- hydroxy poly (oxytetramethylene) polyol.

The isocyanate composition (ZI) contains according to the invention 1, 5-naphthylene (NDI) and 4.4' - diphenylmethane diisocyanate (MDI), preferably in a ratio in the range of 1 to 10 to 10 to 1.

The isocyanate composition may also contain one or more additional polyisocyanates. Suitable polyisocyanates are known to the person skilled in the art. Preferred according to the invention are organic isocyanates as isocyanates, further preference is given to aliphatic, cyclo - aliphati shear, araliphatic and/or aromatic isocyanates, more preferably diioscyanate. Other preferred diisocyanates are tri-, tetra-, penta-, hexa-, hepta- and/or octa-methylene diisocyanate, 2-methyl pentamethylene diisocyanate-1, 5, 2-ethyl butylene-Diisocyanate-1, 4, pentamethylene Diisocyanate 1, 5, butylene-Diisocyanate-1, 4, 1-isocyanato 3, 3, 5-trimethyl-5-isocyanatomethyl cyclohexane (isophorone diisocyanate (IPDI)), 1, 4 and/or 1, 3 bis (isocyanatomethyl) cyclohexane (HXDI), 1, 4-cyclohexane diisocyanate, 1-methyl-2,4-and/or 2,6-cyclohexane diisocyanate, 4.4 '-, 2.4' - and/or 2, 2 '- dicyclohexylmethane diisocyanate, 2.4-and/or 2.6-tolylene diisocyanate (TDI), o-tolidene Diisocyanate (TODI), p-phenyldiisocyanate (PPDI), 1, and/or phenylene diisocyanate 2-diphenylethane diisocyanate, 4.4' -, 2.4 '- and 2.2' - dicyclohexylmethane diisocyanate (H12 MDI), 2.4- Paraphenylendiisocynat (PPDI), 2.4- tetramethylenxylendiisocyant (TMXDI), preferred 2.2 '-, 2.4' - and/or 4, 4' - diphenylmethane diisocyanate (MDI) and/or 1, 6-Hexamethylendiiso-modified isocyanate (HDI).

Particularly preferred are p-phenyl diisocyanate (PPDI) and/or o- Tolidinediisocyanate (TODI). According to a further embodiment the present invention relates to a method as described above, wherein the polyisocyanate composition an isocyanate selected from the group consisting of p-phenyl diisocyanate (PPDI) and o- Tolidinediisocyanate (TODI), or mixtures thereof. The mixture (M1) may contain additional components, for example blowing agents are used. These blowing agents may also contain water. In addition to water as a blowing agent chemically and/or physical active compounds may be employed.

Chemical blowing agents are compounds, which form gaseous products by reaction with isocyanate, such as for example water or formic acid. Among the physical blowing agents are compounds that are added to the building components, being dissolved or emulsified, and expand under the conditions of polyurethane formation.

Preferably physical blowing agents are low-boiling liquids, which further preferably evaporate under the influence of the exothermic polyaddition reaction. Particularly suitable are liquids, which are inert to the organic polyisocyanate and have boiling points below 100 °C. Preferred examples of such liquids are halogenated, preferably fluorinated hydrocarbons, such as methylene chloride and dichloro monofluoromethane, per - or partially fluorinated hydrocarbons, such as trifluoromethane, difluoromethane, difluoroethane, tetrafluoroethane and heptafluoropropane, hydrocarbons, such as n - and iso-butane, n - and iso-pentane as well as the technical available mixtures of these hydrocarbons, propane, propylene, hexane, heptane, cyclobutane, cyclopentane and cyclohexane, dialkyl ethers, preferably dimethyl ether, diethyl ether and furan, carboxylic acids such as formic acid, carboxylic acid ester, preferably for example methyl and ethyl formiate, ketones, preferably for example acetone, and/or fluorinated and/or perfluorinated, tertiary alkylamine, perfluoro-dimethyl-iso-propylamine.

It is also possible to use mixtures of these low boiling liquids with one another and/or with other substituted or unsubstituted hydrocarbons. The appropriate amount of blowing agent to be used depends on the density one wants to reach, as well as the amount of water used. Generally suitable amounts of blowing agent are between 1 weight % to 15 weight %, preferably 2 weight % to 11 weight %, the weight % being based on the polyol composition (ZP).

In a preferred embodiment one of these blowing agent is used in a mixture with water, preference is given not to use physical blowing agents, particularly preferred water is used as the sole blowing agent.

It is also possible to add hollow microspheres comprising physical blowing agent. The hollow microspheres can also be used a mixture with the above-mentioned blowing agents.

The hollow microspheres usually consist of a shell of thermoplastic polymer and are in the core with a liquid, low-boiling substance based on alkanes filled. The production of such hollow microspheres is for example described in US 3 615 972. The hollow microspheres preferably have a diameter of 5 µm to 50 µm. Suitable hollow microspheres are available under the trade name Expancell for example® available from Akzo Nobel.

The hollow microspheres are preferably used in an amount of from 0.5 weight % to 5 weight %, based on the total weight of the polyols used. In a particularly preferred embodiment a mixture of microspheres and water is used as blowing agent, wherein no additional physical blowing agent is comprised.

Particular preference is given to use water as the only blowing agent. Water in the context of the present invention is also suitable as chain extender. Thus, in the context of the present invention water can also be used as chain extender. Also taking intoc account the other building components, water is used in an amount, that the NCO/OH ratio is between 0.85 and 1, 30, particularly preferably between 0.95 and 1, 20.

Since water works as cross linker by reacting with isocyanate groups, thus forming urea groups and acts as chemical blowing agent through formation of carbon dioxide, it is mentioned separately from the optionally further cross-linking agent and/or further blowing agents listed. Preferred chain extenders are alkanediols, preferably having 2 to 12 carbon atoms, preferably 2, 4 or 6 carbon atoms. Another preferred chain extender is selected from the group consisting of ethanediol, 1, 3-propanediol, 1, 5-pentanediol, 1, 6-hexanediol, 1, 7-heptane, 1, 8-octanediol, 1, 9-nonanediol, 1, and preferably 10-decanediol 1, 4-butanediol, or is a mixture thereof. Further preferred chain extenders and/or cross-linkers are dialkylene glycols with 4 to 8 carbon atoms, more preferably diethylene glycol and dipropylene glycol, di -, tri- or tetra-functional polyoxy-alkylenpolyol, or mixtures thereof.

Further preferred chain extenders and/or cross-linking agent are alkandiols, branched-chain and/or unsaturated, with preferably not more than 12 carbon atoms, preferably selected from the group consisting of 1, 2-propanediol, 2-methyl, 2.2-dimethyl-propanediol 1, 3, 2-butyl 2-ethylpropane-1, 3, 1-butene-2-diol, 4-diol-1 and butyne-2, 4, 2 to 4 diesters of terephthalic acid with glycols having 2 to 4 carbon atoms, preferably terephthalic acid-bis-ethylene glycol or terephthalic acid-bis-butaneoiol-1, 4, hydroxyalkylene ethers of hydroquinone or resorcinol, preferably 1, 4-Di - (ss-hydroxyethyl) - hydroquinone or 1, 3-Di - (β-hydroxyethyl) - resorcinol, alkanolamines having 2 to 12 carbon atoms, such as preferably ethanolamine, 2- Aminopropanol and 2.2- dimethylpropanol 3-amino, N-alkyl-alkanolamines, such as N-methyl-N-ethyl-diethanolamine, or are mixtures thereof.

In the context of the present invention preferably used chain extenders are selected from the group consisting of water, diols having a molecular weight in the range of 50 g/mol to 499 g/mol, triols with a molecular weight in the range of 50 g/mol to 499 g/mol, and diamines having a molecular weight in the range of 50 g/mol to 499 g/mol Further preferred chain extenders are selected from the group consisting of water, diols having a molecular weight in the range of 50 g/mol to 200 g/mol, triols with a molecular weight ranging from 50 to 200 g/mol, and in the range of diamines having a molecular weight 50 to 200 g/mol

In order to accelerate the reaction of the starting materials may be of the mixture (M1) for example a catalyst can be added.

Further conventional auxiliary agents and/or additives can be used. Auxiliaries and/or additives are present as a single substance or as a mixture of at least two auxiliaries and/or additives. Mention may be made for example surface-active substances, fillers, flame retardants, nucleating agents, oxidation stabilizers, sliding and demolding aids, dyes and pigments, optionally stabilizers, preferably against hydrolysis, light, heat or discoloration, inorganic and/or organic fillers, reinforcing and/or plasticizers.

Stabilizers in the context of the present invention are additives, the protect a polymer or a polymer mixture from harmful environmental influences. Exemplary are primary and secondary antioxidants, Hindered Amine light stabilizers, UV absorbers, hydrolysis protectors, quenchers and flame retardants. Commercial stabilizers are given in Plastics additive handbook for example, 5th Edition, H. Zweifel, ed., Hanser Publishers, Munich, 2001 ([1]), S.98-S136.

As surface-active substances are for example compounds, which serve for supporting the homogenization of the starting materials and are possibly also suitable for, regulating the cell structure. Mention may be made of for example emulsifiers, such as the sodium salts of castor oil sulfates or of fatty acids as well as salts of fatty acids with amines, e.g. oil acid diethyl amine, stearic acid diethanol-amine, of diethanolamine with ricinoleic acid, salts of sulfonic acids, e.g. alkali or ammonium salts of dodecyl benzene disulfonic acid or dinaphthyl methane disulfonic acid and ricinoleic acid; foam stabilizers, such as siloxane-oxyalkylene copolymers and other organosiloxanes, oxyethylated alkylphenols, oxyethylated fatty alcohols, paraffin oils, castor oil or ricinoleic acid ester -, and peanut oil and turkey oil, cell regulators, such as paraffins, fatty alcohols and dimethylpolysiloxanes. In order to improve the emulsifying properties, the cell structure and/or the stabilization thereof are also used oligomeric polyacrylates with poly-oxyalkylene - and fluoroalkane radicals as side groups. The surface-active substances are usually used in amounts of 0.01 weight% to 5 weight%, based on 100 weight %of the polyol composition (ZP).

As fillers, in particular reinforcing fillers, preferably are organic and/or inorganic fillers, reinforcing agents and weighting agent. The following are specifically mentioned by way of example: inorganic fillers such as siliceous minerals, for example sheet silicates such as antigorite, serpentine, horn aperture, amphibole, chrysotile, talc; metal oxides, such as caolin, aluminum oxides, aluminum silicate, titanium oxides and iron oxides, metal salts such as chalk, barite and inorganic pigments, such as cadmium sulfide, zinc sulfide and glass particles. Preferred organic fillers are: carbon black, melamine, expanded graphite, rosin, cyclopentadienyl resins, graft polyols and graft polyols.

As reinforcing fillers are preferably used fibers, for example carbon fibers or glass fibers, particularly, when a high heat distortion resistance or very high rigidity is required, wherein the fibers with adhesion promoters and/or sizes can be equipped.

The inorganic and organic fillers may be used individually or as mixtures and are usually used in amounts of 0.5 weight% to 50 weigth%, prefer ably 1 weight% to 39 weight% referring to the polyol composition (ZP) and the isocyanate composition (ZI).

Suitable flame retardants are tricresyl phosphate, tris - (2-chloroethyl) phosphate, tris - (2-chloropropyl) - phosphate, tris - (1, 3-dichloropropyl) phosphate, Tris - (2.3-dibromopropyl) phosphate and tetrakis - (2-chloroethyl) - ethylene diphosphate.

In addition to the above-mentioned halogen substituted phosphates can also be used inorganic flame retardants such as red phosphorus, aluminum oxide hydrate, antimony trioxide, arsenic trioxide, and calcium sulfate or cyanuric acid derivatives of ammonium polyphosphate, such as melamine or mixtures of the at least two flame retardants, such as ammonium phosphates and melamine optionally starch and/or expanded graphite. Preferably5 weight% to 50 weight%-, preferably 5 weight % to 25 weight% of the above-mentioned flame retardants or mixtures are used for each 100 weight % of the sum of the component (a) and the component (b).

The nucleating agent can be e.g. talc, calcium fluoride, sodium phenylphosphinate, aluminum oxide and finely divided polytetrafluoroethylene in amounts of up to 5 weight %, based on the total weight of the polyol composition (ZP) and the isocyanate composition (ZI).

Suitable oxidation retardants and thermal stabilizers, may be added to the inventive polyurethane elastomer. These are for example halides of metals of the group I of the periodic system, for example sodium, potassium, lithium halides, if appropriate, in conjunction with copper (I) - halides, e.g. chlorides, bromides or iodides, steric hindered phenols, hydroquinones, as well as substituted compounds of these groups and mixtures thereof, preferably in concentrations of up to 1 weight % based on the weight of the polyol composition (ZP) and the isocyanate composition (ZI).

Hydrolysis stabilizers are various substituted carbodiimides including as preferred example 2.2 ', 6.6' - tetraisopropyl diphenyl carbodiimide or carbodiimides based on 1, 3 bis (1 methyl-1-isocyanato-ethyl) - benzene as described for example in DE 19821668 A1, US 6,184,410, DE 10004328 A1, US 6,730,807, EP 0 940 389 B1 or US 5,498,747, preferably in an amount of up to 4 weight %, preferably 1, 5 weight % to 2.5 weight %, based on the weight of the polyol composition (ZP) the propellant composition and the isocyanate composition (ZI).

### Mold release.

Preferred sliding and mold release agents, which preferably are used in amounts of up to 1 weight %, based on the weight of the polyol composition (ZP) and the isocyanate composition (ZI) . They are preferably selected from the group consisting of stearic acid, stearyl alcohol, stearic acid esters and stearic acid amides as well as the fatty acid esters of pentaerythritol, or are mixtures thereof.

More detailed information on the above-mentioned auxiliaries and additives are found in the specialized literature, e.g. from Plastics additive handbook, 5th edition, H. Zweifel, ed, Hanser Publisher, Munich, 2001, S.98-S136.

According to a further aspect the present invention also relates to a molded article obtainalbel or obtained by a method at least comprising the steps of (i) to (v):
(i) providing a mixture (M1), comprising
   (a) at least one prepolymer having isocyanate groups, wherein the prepolymer is obtained by reacting a polyol composition (ZP) and a isocyanate composition (ZI) at least comprising 1, 5-naphthylene diisocyanate (NDI) and 4.4 ' - diphenylmethane diisocyanate (MDI),
   (b) at least one chain extender (KV);
(ii) the introduction of the mixture (M1) into a mold;
(iii) heating the mixture (M1) in the mold to a temperature in the range of 140°C to 200°C to give a shaped body (F1);
(iv) forming the molded body (F1) to give a shaped body precursor (V2)
(v) treating the molding precursor (FV2) at a temperature in the range of 170 °C to 210°C to give a shaped body (F2) comprising a polyurethane elastomer.

With respect to the compounds employed and preferred proportions is referred to the above embodiments.

In a preferred embodiment B the microcellular polyurethane elastomer is the reaction product of polyol - preferably polyetherpolyol -, chain extender, water as blowing agent and isocyanate, preferably methylene-diphenyldiisocyanate or modified methylene-diphenyldiisocyanate, more preferable modified methylene-diphenyldiisocyanate. The index of the isocyanate compound to the compounds reactive with isocyanate preferably is between 92 and 107, even more preferably between 96 and 102.

For these preferred microcellular polyurethane elastomers of embodiments B, or one of its preferred embodiments, polyol chain extenders and isocyanates with a functionality of 2 are particularly suitable. Depending on the application, functionalities slightly different from 2 can be advantageous.

In a preferred embodiment of embodiment B or one of its preferred embodiments, the isocyanate is essentially based on 2,2'-, 2,4'- and/or 4,4'-diphenylmethane diisocyanate (MDI), or modified diphenylmethane-diisocyanate (mMDI), modified preferably refers to carbodiimide modified.

In a very preferred embodiment pure 4,4'-diisocyanato-diphenylmethane is used, pure means that the proportions of 2,4'- and 2,2'-isomer are lower than about 2 weight %.

In a further preferred embodiment for the synthesis of the preferred microcellular polyurethane of embodiment B or one of its preferred embodiments, the isocyanate component is the reaction product of a surplus of isocyanate and the polyetherpolyol, also referred to as prepolymer. This production process is also referred to as prepolymer process. The prepolymer may further comprise a chain extender and/or a stabilizer. The isocyanate content (NCO content) of this prepolymer preferably is between 11 % and 27 %, more preferably between 14 % and 21.5 %, even more preferred between 17 % and 19 %.

Typically, the isocyanate prepolymer also contains proportions of short-chain diols, preferably dipropylene glycol, tripropylene glycol or the like and/or carbodiimide-modified MDI such as e.g. Lupranate MM103. This serves to suppress the crystallization of MDI in the mixture and allows the component to be stored at room temperature for months without MDI precipitating.

The prepolymer may be further stabilized by adding acid chlorides such as and preferred diethylene glycol bis-chloroformate or benzoyl chloride, which prolong the shelf life of the component. In a preferred embodiment the prepolymer comprises polytetrahydrofuran with a number average molecular weight of 2 x 10³ g/mol (35 weight % to 45 weight %), carbodiimide-modified diphenylmethane-4,4-diisocyanate (2 weight % to6 weight %), 4,4'-diphenylmethane diisocyanate (MDI) with low acidity (52 weight % to 58 weight %), preferably further comprising stabilizers e.g. as outlined above.

The polyol in this embodiment B or one of its preferred embodiments, preferably is a polyetherpolyol, more preferably a polytetrahydrofuran, preferably with a functionality of 2. More preferably this polytetrahydrofuran has a number average molecular weight from 1 x 10³ g/Mol to 5 x 10³ g/Mol, more preferably from 1 x 10³ g/Mol to 3 x 10³ g/Mol, even more preferred from 1.5 x 10³ g/Mol to 2.5 x 10³ g/Mol, most preferably 2 x 10³ g/Mol.

PolyTHF has a tendency to soft phase crystallization. To suppress this, further polyols are added, preferably in an amount of 10-30 weight% of the total weight of the polyol used.

In one of such preferred embodiments the polyetherpolyol is a mixture of polytetrahydrofuran, preferably with an OH number of about 56 mg KOH/g, a poly-propylene-ethylene diol, preferably with a OH number of about 28 mg KOH/g, and poly-propylene-ethylene triol (OH number of about 28 mg KOH/g).

Very preferred the ratio of the poly-propylene-ethylene diol to the poly-propylene-ethylene triol in the mixture is from 1 : 0.7 to 1 : 1.3.

In another of such preferred embodiments, to the abovementioned mixture of polytetrahydrofuran, poly-propylene-ethylene-diol, and poly-propylene-ethylene-triol, medium-chain polyols are added. These medium-chain polyols have a functionality of more than 2, preferably between 2.4 and 3.2, and an OH value from 100 mg KOH/g to 500 mg KOH/g. They are preferably added in an amount of 0.5 weight % and 5.0 weight % of the total weight of the polyol used.

In a preferred embodiment of embodiment B or one of its preferred embodiments the chain extender is selected from the group consisting of ethylene glycol, 1,4-butandiol, 1,3-propanediol, 1,5-pentane diol, diethylene glycol, water (see below), or is a mixture thereof. In one preferred embodiment 1,4-butanediol taken alone is preferred, in yet another preferred embodiment a mixture of 1,4-butandiol and ethylene glycol, in which more preferably the relation of ethylene glycol to 1,4-butanediol is smaller than 1:25.

Water serves as chain extender (see above), but also as blowing agent in the embodiment B or one of its preferred embodiments. Other blowing agents may be used in addition, preferably physical blowing agents, e.g. chloro-fluoro-carbons (CFCs,), very preferred Opteon 1100 (a hexafluoro-carbon (HFC) with the formula: 1,1,1,4,4,4-hexafluorobut-2-ene), or carbon dioxide, preferably as gas.

In a preferred embodiment of embodiment B or one of its preferred embodiments, a catalyst is used. Suitable catalysts which, in particular, accelerate the reaction between NCO groups of the organic diisocyanates and the polyols, are amine catalysts, preferably tertiary amines, preferably those which have exposed their electron pair due to their stericity. Preferred amine catalysts comprise a structure -N(CH3)-CH2-CH2-N(CH3)- or -N(CH3)-CH2-CH2-O-, or have an ethylene bridge between an aminic nitrogen and an aminic nitrogen or oxygen. A very preferred catalyst is selected from the group of are triethylamine, dimethylcyclohexylamine, N-methylmorpholine, N,N'-dimethylpiperazine, 2-(dimethylaminoethoxy)ethanol, or 1,4-diazabicyclo[2.2.2]octane, or is a mixture thereof.

Other preferred catalysts are organic metal compounds such as titanic esters, bismuth salts, preferably salts of bismuth carboxylic esters, zink esters, iron compounds such as iron (III) acetylacetonate, tin compounds, e.g. tin diacetate, tin dioctoate, tin dilaurate or dialkyl tin salts of aliphatic carboxylic acids, e.g. dibutyltin diacetate, dibutyltin dilaurate or the like. In bismuth salts oxidation stage of the bismuth is preferably 2 or 3, more preferably 3. Preferred carboxylic acids have 6 to 14 carbon atoms, more preferred 8 to 12 carbone atoms. Preferred examples of bismuth salts are bismut(III)-neodecanoat, bismut-2-etyhlhexanoat and bismut-octanoat.

The catalyst is either a single catalyst or a mixture of catalysts, preferably selected from amine catalyst or tin catalyst, preferably tin mercaptide, even more preferred dialkytincarboxylate mercaptide. One preferre tin catalyst is sleeted from the group comprising dimethyl tin mercaptide, dioctyl tin mercaptide or a dimethyl tin carboxylate. Dimethyl tin mercaptide is very preferred. The catalyst is either a single catalyst, or is a mixture of at least two catalyst, preferably it is a mixture of tin catalyst and amine catalyst, as outlined and preferred above.

The catalysts, if used, are usually used in amounts of from 0.0001 to 1 parts by weight per 100 parts by weight of polyols.

The preferred blowing agent in embodiment B or on of its preferred embodiments, is a chemical and/or a physical blowing agent. A very preferred physical blowing agent is 1,1,1,4,4,4-hexafluoro butene. A very preferred chemical blowing agent is water. The chemical and the physical blowing agent in preferred embodiments are taken alone, in other preferred embodiments are used as mixture.

To the avoidance of doubt, water sometimes in polyurethane chemistry is also referred to as chain extender. In the context of this embodiment, water shall be blowing agent only.

In other preferred embodiments of embodiment B foam stabilizers are used, which are substances that promote the formation of a regular cell structure during foam formation. Preferred foam stabilizers are selected from the following groups: silicone-containing foam stabilizers, such as siloxane-oxalkylene copolymers and other organopolysiloxanes, alkoxylation products of fatty alcohols, oxo alcohols, fatty amines, alkylphenols, dialkylphenols, alkylcresols, alkylresorcinol, naphthol, alkylnaphthol, naphthylamine, aniline, alkylaniline, toluidine, bisphenol A, alkylated bisphenol A, Polyvinyl alcohol, alkoxylation products of condensation products of formaldehyde and alkylphenols, formaldehyde and dialkylphenols, formaldehyde and alkylcresols, formaldehyde and alkylresorcinol, formaldehyde and aniline, formaldehyde and toluidine, formaldehyde and naphtol, formaldehyde and alkylnaphtol and formaldehyde and bisphenol A.

In preferred embodiments one foam stabilizer is used, in other preferred embodiments a mixture of two or more of these foam stabilizers is used.

Foam stabilizers are preferably used in an amount of 0.02% to 4% by weight, particularly preferably 0.1% to 1.5% by weight, based on the total weight of the structural components.

For Producing embodiment B or one of its preferred embodiments, the components outlined above are mixed for producing the microcellular polyurethane elastomer. In a preferred embodiment the microcellular polyurethane elastomer is produced by a two-step process. In a first step an isocyanate prepolymer is produced mainly on the basis of the isocyanate as outlined above and the polyol used. The prepolymer may further comprise a chain extender and/or a stabilizer. The isocyanate content (NCO content) of this prepolymer preferably is between 11 % and 27 %, more preferably between 14 % and 22 %, even more preferred between 17 % and 19 %.

This isocyanate prepolymer in a second steps is reacted with the polyol composition further comprising water, and in preferred embodiments, chain extender, and/or stabilizer and/or blowing agent.

In a preferred embodiment the polyol component is the mixture of polytetrahydrofuran, preferably with a molecular weight of 2 x 10³ g/ Mol and preferably 6 5 weight %, : a mixture of polyalkylene diols with an average OH number of 26-44 mg KOH/g and an average functionality of 2-3, preferably with 20 weight %, 1,4-butane diol, preferably with 10 weight % to 14 weight %, ethylene glycol, preferably with 0.1 weight % to 1 weight %, and water, preferably with 0.3 weight % to 0.5 weight %.

Another preferred polyol component comprises polytetrahydrofuran preferably with an OH number of 54 to 58 mg KOH/g, more preferably about 56 mg KOH/g, further preferred in an amount of 65 to 75 weight %, more preferred with about 67 weight % to 69 weight %, a mixture of polypropylene ethylene glycol and poly-propylene-ethylene-glycol triol, preferably each with a OH number of 25 mg KOH/g to 30 mg KOH/g, more preferably of about 27 mg KOH/g, the mixture is in an amount of 15 weight % to 20 weight % and the glycol and the triol preferably are in a ratio of 0.9 to 1 to 1.5. to 1, more preferably about 1.3 to 1, the component comprising further butane diol, preferably 1,4-butane diol, more preferably in an amount of 12 weight % to 16 weight %, more preferred about 13 weight % to 14 weight %, and water, preferably 0.2 weight % to 0.8 weight %, more preferably about 0.5 weight %.

In further preferred embodiments these polyol components further comprise a surfactant, preferably with 0.2 weight % to 1 weight %, or a catalyst, preferably with 0.05 weight % to 1 weight %, or a mixture of the surfactant and the catalyst, wherein the surfactant preferably is a silicons based surfactant and the catalyst is selected from tertiary amine or dialkyl tin mercaptide, or is a a mixture thereof.

The temperatures for mixing the prepolymer preferably is between 30 °C and 80 °C, more preferably between 40°C and 60 °C. The polyol composition is mixed at temperature between 40°C and 80 °C, preferably between 50°C and 65 °C.

The prepolymer and the polyol composition are mixed at a mixing ratio which preferably gives a characteristic number of 92 to 107, more preferably 96 to 102. The characteristic number is calculated 100 x Mol of NCO content divided by Mol of groups reactive to NCO.

The reaction of the prepolymer with the polyol composition preferably is carried out on a highpressure casting machine. The reaction product preferably is directly casted to a mould having the form of the final product. The temperature of the mould preferably between 30-90 °C (e.g. 35 °C, 40 °C, 45 °C, 50 °C, 55 °C, 60 °C, 65 °C, 70 °C, 75 °C, 80 °C, 85 °C). The best results are obtained at tool temperatures of about 40 °C and 50 °C.

Prior to foaming, the moulds are prepared with a release agent. Suitable release agents are based on non-volatile waxes and/or non-volatile silicones as release-active compound. They contain either a package of organic solvents, like butyl acetate, methoxy propyl acetate, volatile silicones or the like, or they are based on water, and the waxes/silicones are dispersed into the water using a suitable emulsifier. If water is used, an antimicrobial agent is added, like thiabendazol, N-methylisothiazolinon, N-octylisothiazolinon, N-butylbenzoisothiazolinon or mixtures thereof. Solvent contents or water contents are in the range of 80-95%.

In preferred embodiment other additives either liquid or solid are added to the release agent. Preferred examples of those additives are Teflon® powder, liquid or semi-liquid fluoroorganic compounds, calcium stearate, amid waxes, or mixtures thereof.

Preferably, a monoamine is part of the release agent mixture, more preferably a silicone amine or a polyetheramine like Jeffamine® M600, more preferably in concentrations of 0.2 - 2 weigth% referring to the whole amount to the release agent.

Other surface-active components may be added to the release agent. These surface active components improve the spreading of the release agent on the surface of the mould. These-preferably are selected from the group consisting of ethoxylated fatty acids, ethoxylated fatty alcohols, propoxylated fatty acids, propoxylated fatty alcohols, alkyl polyglycosides, polyalkylene glycols, alkyl sulphates, alkyl sulphonates, alkyl ether sulphates, or are mixtures thereof.

The products are post-cured preferably at 80 °C to 110 °C, more preferably for a period of 8-24 hours. Very preferred tempering is 10 to 14 hours at 90 °C.

In preferred embodiments of the invention the density according to DIN EN ISO 845 is in the range of 0,12 x 10³ kg/m³ to 0,5 x 10³ kg/m³.

The cells of the microcellular polyurethane preferably have a diameter between 0.05 mm and 0.5 mm, more preferably between 0.05 mm and 0.15 mm.

The present invention includes various embodiments, resulting for example from various production processes and the properties of the polyurethanes obtained. For example, by choosing different isocyanate indices in the manufacture of the materials different densities can be obtained.

A further aspect of the invention is the use of a molded article as described above or a molded article obtainable or obtained according to a method as described above as a damping element, shock absorber or as part of a shoe or a shock absorber shoe sole, for example a insole or a or midsole.

The present invention also relates to shaped articles. Preferred shaped articles are for example a damping element, a shock absorber or stop buffer, preferably for vehicle construction, railway vehicle construction before the air -, water vehicle construction or land vehicle construction, particularly preferably for land vehicles, preferably as additional springs, bumper, cross-link bearings, rear axle bearing, stabilizer-bearing, longitudinal struts-bearing, strut support bearings, shock - damper bearing, bearing for triangular link and/or as emergency whell located on the rim, for example in a tire damage causes that the vehicle can still be controlled.

A further aspect of the present invention is a molded body which is shaped, wherein the shaped article preferably is a damping element, shock absorber, bumper, or a part of a shoe or a shoe sole, for example, a in sole or a midsole.

A shoe sole or parts of a shoe sole or the like can be obtained from the molded part for example preferably by cutting, stamping, peeling and/or thermo-forming, optionally together with other materials, such as optionally further polyurethane foams or ethylene vinyl acetated.

The inventive polyurethane shoe soles are preferably used as midsole, for example for street shoes, sports shoes, sandals and boots, used. In particular according to the invention are used as a midsole for athletic shoes polyurethane shoe soles. Further comprises a shoe sole according to the shoe sole parts also, for example at - heel parts or bale parts. Shoe soles according to the invention can also be used sole or in combination as a single laying sole.

A method according to the invention leads to polyurethane shoe soles with excellent mechanical properties. In particular polyurethane shoe soles according to the invention exhibit high rebound resilience at high hardness and low density. It is a further advantage, that in particular with the use of polyols having a maximum functionality of 2.2 and in the absence of cross-linking agent the resulting polyurethane shoe soles may be thermally deformed.

The invention further relates to a recycling of the produced polyurethanes by melting the meltable products and reproduce moulded articles.

A final aspect of the invention is the use of the polyurethanes in hybrid materials. In this case a polyurethane according to the invention is combined with other materials, for example ethyl vinyl acetate (EVA). Preferably the hybrid is a layer structure with at lest one polyurethane and another material, preferably EVA.

Polyurethane shoe soles in the inventive sense here comprise one-piece shoe soles, so-called combi-soles, midsoles, insoles or shoe sole parts, such as heel parts or the bale parts. Insoles mean inserts for the forefoot, inserts over the entire feet, or foot beds.

### Examples

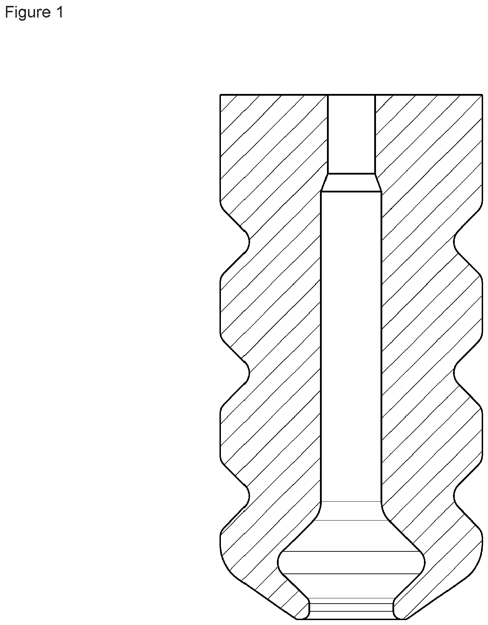

The static mechanical properties were determined from blocks, and the dynamic mechanical properties from spring elements (cf. Fig. 1).

Fig.1: Spring element (including bending lip)

### Example 1 (according to the invention)

### 1.1. Preparation of the prepolymer comprising NCO groups

57.0 parts by weight of polytetrahydrofuran 2000 (PolyTHF 2000 from BASF SE) and 14.3 parts by weight of polytetrahydrofuran 1000 (PolyTHF 1000 from BASF SE) and 0.2 part by weight of silicone-based foam stabilizer (DC 193 from Dow Corning) were heated to 140°C under a nitrogen atmosphere in a three-necked flask, and 28.5 parts by weight of 4,4'-diisocyanatodiphenylmethane (Lupranat® MES from BASF SE) were added with stirring. The reaction temperature was kept at 145°C for 10 min to complete the reaction and to synthesize allophanate and cooling was then effected. A virtually colorless liquid having an NCO content of 5.7%, an allophanate content of 0.2 % and a viscosity of 1600 mPas at 80°C resulted.

### 1.2. Preparation of the crosslinking component:

| | |
|---|---|
| 74.1 parts by weight of | 50% strength aqueous solution of a fatty acid sulfate |
| 24.6 parts by weight of | nonionic emulsifier polyethylene glycol (PEG-40) sorbitol hexaoleate |
| 0.4 part by weight of | di-n-octyltin bis(2-ethylhexylthioglycolate) |
| 0.9 part by weight of | a mixture of Lupragen® N 202 (BASF SE) and Niax® catalyst E-A-1 (GE Silicones), catalysts |

### 1.3. Production of the cylindrical molding

100 parts by weight of the prepolymer according to (1) were mixed with 3.03 parts by weight of the crosslinking component according to (2) with the aid of a low pressure casting machine at 80°C prepolymer temperature and 35°C crosslinking agent temperature, the mixture was introduced into a closable mold thermostatted at 75°C (for example having the spring geometry according to Fig. 1) and the foam was cured at 75°C for 15 min. After removal of the microcellular product from the mold the shaped article was thermally postcured for 14 h at 110°C.

### Example 2 (according to the invention)

### 2.1. Preparation of the prepolymer comprising NCO groups

27.7 parts by weight of 4,4'-diisocyanatodiphenylmethane (Lupranat® MES from BASF SE) were melted under a nitrogen atmosphere in a three-necked flask, and a mixture of 54.1 parts by weight of polytetrahydrofuran 2000 (PolyTHF 2000 from BASF SE), 13.5 parts by weight of polytetrahydrofuran 1000 (PolyTHF 1000 from BASF SE) and 4.7 parts by weight of polyoxypropylene (80% by weight)-polyoxyethylene (20% by weight) glycol (hydroxyl number 27 mg KOH/g; molecular weight 5180 g/mol, prepared using glycerol as initiator molecule) was added at 60°C with stirring. The mixture was heated to 100°C for 1.5 hours to complete the reaction and then cooled. A virtually colorless liquid having an NCO content of 5.7% and a viscosity of 1900 mPas at 80°C resulted.

### 2.2. Preparation of the crosslinking component:

| | |
|---|---|
| 71.2 parts by weight of | a 50% strength aqueous solution of a fatty acid sulfate |
| 23.7 parts by weight of | nonionic emulsifier polyethylene glycol (PEG-40) sorbitol hexaoleate |
| 3.9 parts by weight of | a silicone-based foam stabilizer (DC 193 from Dow Corning) |
| 0.3 part by weight of | di-n-octyltin bis(2-ethylhexylthioglycolate) |
| 0.9 part by weight of | a mixture of Lupragen® N 202 (BASF SE) and Niax® catalyst E-A-1 (GE Silicones), catalysts |

### 2.3. Production of the cylindrical molding

100 parts by weight of the prepolymer according to (1) were mixed with 3.03 parts by weight of the crosslinking component according to (2) with the aid of a low pressure casting machine at 80°C prepolymer temperature and 35°C crosslinking agent temperature, the mixture was introduced into a closable mold at 75°C (for example having the spring geometry according to Fig. 1) and the foam was cured at 75°C for 15 min. After removal of the microcellular product from the mold the shaped article was thermally postcured for 14 h at 110°C.

### Example 3 (according to the invention)

### 3.1. Preparation of the prepolymer comprising NCO groups

64.6 parts by weight of polytetrahydrofuran 2000 (PolyTHF 2000 from BASF SE) and 7.2 parts by weight of polytetrahydrofuran 1000 (PolyTHF 1000 from BASF SE) and 0.2 part by weight of silicone-based foam stabilizer (DC 193 from Dow Corning) were heated to 140°C under a nitrogen atmosphere in a three-necked flask, and 28.0 parts by weight of 4,4'-diisocyanatodiphenylmethane (Lupranat® MES from BASF SE) were added with stirring. The reaction temperature was kept at 145°C for 10 min to complete the reaction and to synthesize allophanate and then cooled. A virtually colorless liquid having an NCO content of 5.8%, an allophanate content of 0.2% and a viscosity of 2000 mPas at 80°C resulted.

### 3.2. Preparation of the crosslinking component:

| | |
|---|---|
| 74.0 parts by weight of | a 50% strength aqueous solution of a sulfated fatty acid ester |
| 24.7 parts by weight of | nonionic emulsifier polyethylene glycol (PEG-40) sorbitol hexaoleate |
| 0.3 part by weight of | di-n-octyltin bis(2-ethylhexylthioglycolate) |
| 1.0 part by weight of | a mixture of Lupragen® N 202 (BASF SE) and Niax® catalyst E-A-1 (GE Silicones), catalysts |

### 3.3. Production of the cylindrical molding

100 parts by weight of the prepolymer according to (1) were mixed with 3.10 parts by weight of the crosslinking component according to (2) with the aid of a low pressure casting machine at 80°C prepolymer temperature and 35°C crosslinking agent temperature, the mixture was introduced into a closable mold at 75°C (for example having the spring geometry according to Fig. 1) and the foam was cured at 75°C for 15 min. After removal of the microcellular product from the mold the shaped article was thermally postcured for 14 h at 110°C.

### Example 4 (according to the invention)

### 4.1. Preparation of the prepolymer comprising NCO groups

27.7 parts by weight of 4,4'-diisocyanatodiphenylmethane (Lupranat® MES from BASF SE) were melted under a nitrogen atmosphere in a three-necked flask, and a mixture of 60.9 parts by weight of polytetrahydrofuran 2000 (PolyTHF 2000 from BASF SE), 6.8 parts by weight of polytetrahydrofuran 1000 (PolyTHF 1000 from BASF SE) and 4.7 parts by weight of polyoxypropylene (80% by weight)-polyoxyethylene (20% by weight) glycol (hydroxyl number 27 mg KOH/g; molecular weight 5180 g/mol, prepared using glycerol as initiator molecule) was added at 60°C with stirring. The mixture was heated to 90°C for 1.5 hours to complete the reaction and then cooled. A virtually colorless liquid having an NCO content of 6.0% and a viscosity of 1400 mPas at 80°C resulted.

### 4.2. Preparation of the crosslinking component:

| | |
|---|---|
| 94.5 parts by weight of | a 50% strength aqueous solution of a fatty acid sulfate |
| 4.1 parts by weight of | a silicone-based foam stabilizer (DC 193 from Dow Corning) |
| 0.5 part by weight of | di-n-octyltin bis(2-ethylhexylthioglycolate) |
| 0.9 part by weight of | N-(2-dimethylaminoethyl)-N'-piperazine |

### 4.3. Production of the cylindrical molding

100 parts by weight of the prepolymer according to (1) were mixed with 2.56 parts by weight of the crosslinking component according to (2) with the aid of a low pressure casting machine at 80°C prepolymer temperature and 35°C crosslinking agent temperature, the mixture was introduced into a closable mold at 75°C (for example having the spring geometry according to Fig. 1) and the foam was cured at 75°C for 15 min. After removal of the microcellular product from the mold the shaped article was thermally postcured for 14 h at 110°C.

### Example 5 (according to the invention)

### 5.1. Preparation of the prepolymer comprising NCO groups

27.4 parts by weight of 4,4'-diisocyanatodiphenylmethane (Lupranat® MES from BASF SE) were melted under a nitrogen atmosphere in a three-necked flask, and a mixture of 62.3 parts by weight of polytetrahydrofuran 2000 (PolyTHF 2000 from BASF SE), 6.9 parts by weight of polytetrahydrofuran 1000 (PolyTHF 1000 from BASF SE) and 3.4 parts by weight of polyoxypropylene (80% by weight)-polyoxyethylene (20% by weight) glycol (hydroxyl number 27 mg KOH/g; molecular weight 5180 g/mol, prepared using glycerol as initiator molecule) was added at 60°C with stirring. The mixture was heated to 90°C for 1.5 hours to complete the reaction and then cooled. A virtually colorless liquid having an NCO content of 5.9% and a viscosity of 1600 mPas at 80°C resulted.

### 5.2. Preparation of the crosslinking component:

| | |
|---|---|
| 94.7 parts by weight of | a 50% strength aqueous solution of a fatty acid sulfate |
| 4.1 parts by weight of | a silicone-based foam stabilizer (DC 193 from Dow Corning) |
| 0.4 part by weight of | di-n-octyltin bis(2-ethylhexylthioglycolate) |
| 0.8 part by weight of | N-(2-dimethylaminoethyl)-N'-piperazine |

### 5.3. Production of the cylindrical molding

100 parts by weight of the prepolymer according to (1) were mixed with 2.4 parts by weight of the crosslinking component according to (2) with the aid of a low pressure casting machine at 80°C prepolymer temperature and 35°C crosslinking agent temperature, the mixture was introduced into a closable mold at 75°C (for example having the spring geometry according to Fig. 1) and the foam was cured at 75°C for 15 min. After removal of the microcellular product from the mold the shaped article was thermally postcured for 14 h at 110°C.

### Example 6 (according to the invention)

### 6.1. Preparation of the prepolymer comprising NCO groups

27.7 parts by weight of 4,4'-diisocyanatodiphenylmethane (Lupranat® MES from BASF SE) were melted under a nitrogen atmosphere in a three-necked flask, and a mixture of 47.8 parts by weight of polytetrahydrofuran 2000 (PolyTHF 2000 from BASF SE), 13.7 parts by weight of polytetrahydrofuran 1000 (PolyTHF 1000 from BASF SE), 6.1 parts by weight of polytetrahydrofuran 1800 (PolyTHF 1800 from BASF SE) and 4.7 parts by weight of polyoxypropylene (80% by weight)-polyoxyethylene (20% by weight) glycol (hydroxyl number 27 mg KOH/g; molecular weight 5180 g/mol, prepared using glycerol as initiator molecule) was added at 60°C with stirring. The mixture was heated to 100°C for 1.5 hours to complete the reaction and then cooled. A virtually colorless liquid having an NCO content of 5.7% and a viscosity of 2100 mPas at 70°C resulted.

### 6.2. Preparation of the crosslinking component:

cf. example 5 (according to the invention)

### 6.3. Production of the cylindrical molding

100 parts by weight of the prepolymer according to (1) were mixed with 2.3 parts by weight of the crosslinking component according to (2) with the aid of a low pressure casting machine at 70°C prepolymer temperature and 35°C crosslinking agent temperature, the mixture was introduced into a closable mold at 70°C (for example having the spring geometry according to Fig. 1) and the foam was cured at 70°C for 15 min. After removal of the microcellular product from the mold the shaped article was thermally postcured for 14 h at 110°C.

### Example 7 (according to the invention)

### 7.1. Preparation of the prepolymer comprising NCO groups

26.5 parts by weight of 4,4'-diisocyanatodiphenylmethane (Lupranat® MES from BASF SE) were melted under a nitrogen atmosphere in a three-necked flask, and a mixture of 55.0 parts by weight of polytetrahydrofuran 2000 (PolyTHF 2000 from BASF SE), 13.8 parts by weight of a polypropylene oxide (Acclaim™ Polyol 2200 from BAYER AG, hydroxyl number of 56 mg KOH/g, molecular weight 2000 g/mol) and 4,7 parts by weight of polyoxypropylene (80% by weight)-polyoxyethylene (20% by weight) glycol (hydroxyl number 27 mg KOH/g; molecular weight 5180 g/mol, prepared using glycerol as initiator molecule) was added at 60°C with stirring. The mixture was heated to 100°C for 1.5 hours to complete the reaction and then cooled. A virtually colorless liquid having an NCO content of 5.8% and a viscosity of 1200 mPas at 75°C resulted.

### 7.2. Preparation of the crosslinking component:

cf. example 2 (according to the invention)

### 7.3. Production of the cylindrical molding

100 parts by weight of the prepolymer according to (1) were mixed with 3.10 parts by weight of the crosslinking component according to (2) with the aid of a low pressure casting machine at 75°C prepolymer temperature and 35°C crosslinking agent temperature, the mixture was introduced into a closable mold at 67°C (for example having the spring geometry according to Fig. 1) and the foam was cured at 67°C for 15 min. After removal of the microcellular product from the mold the shaped article was thermally postcured for 14 h at 110°C.

### Example 8 (according to the invention)

### 8.1. Preparation of the prepolymer comprising NCO groups

26.4 parts by weight of 4,4'-diisocyanatodiphenylmethane (Lupranat® MES from BASF SE) were melted under a nitrogen atmosphere in a three-necked flask, and a mixture of 54.2 parts by weight of polytetrahydrofuran 2000 (PolyTHF 2000 from BASF SE), 13.5 parts by weight of a polypropylene oxide (hydroxyl number of 55 mg KOH/g, molecular weight 1970 g/mol, prepared using propylene glycol as an initiator molecule) and 5.9 parts by weight of polyoxypropylene (80% by weight)-polyoxyethylene (20% by weight) glycol (hydroxyl number 27 mg KOH/g; molecular weight 5180 g/mol, prepared using glycerol as an initiator molecule) was added at 60°C with stirring. The mixture was heated to 100°C for 1.5 hours to complete the reaction and then cooled. A virtually colorless liquid having an NCO content of 5.8% and a viscosity of 1400 mPas at 75°C resulted.

### 8.2. Preparation of the crosslinking component:

| | |
|---|---|
| 94.7 parts by weight of | a 50% strength aqueous solution of a sulfated fatty acid ester |
| 4.1 parts by weight of | a silicone-based foam stabilizer (DC 193 from Dow Corning) |
| 0.4 part by weight of | di-n-octyltin bis(2-ethylhexylthioglycolate) |
| 0.8 part by weight of | N-(2-dimethylaminoethyl)-N'-piperazine |

### 8.3. Production of the cylindrical molding

100 parts by weight of the prepolymer according to (1) were mixed with 2.34 parts by weight of the crosslinking component according to (2) with the aid of a low pressure casting machine at 75°C prepolymer temperature and 35°C crosslinking agent temperature, the mixture was introduced into a closable mold at 67°C (for example having the spring geometry according to Fig. 1) and the foam was cured at 67°C for 15 min. After removal of the microcellular product from the mold the shaped article was thermally postcured for 14 h at 110°C.

### Comparative example 1

### 9.1. Preparation of the prepolymer comprising NCO groups

70.7 parts by weight of poly(ethylenebutylene adipate) (hydroxyl number of 56 mg KOH/g, molecular weight 2000 g/mol), 0.4 part by weight of 1,4-butanediol and 0.2 part by weight of a silicone-based foam stabilizer (DC 193 from Dow Corning) were heated to 140°C under a nitrogen atmosphere in a three-necked flask, and 28.6 parts by weight of 4,4'-diisocyanatodiphenylmethane (Lupranat® MES from BASF SE) were added with stirring. The reaction temperature was kept at 145°C for 10 min to complete the reaction and to synthesize allophanate and cooling was then effected. A virtually colorless liquid having an NCO content of 6.0%, an allophanate content of 0.2% and a viscosity of 1900 mPas at 90°C resulted.

### 9.2. Preparation of the crosslinking component:

| | |
|---|---|
| 74.4 parts by weight of | a 50% aqueous solution of a sulfated fatty acid ester |
| 21.3 parts by weight of | 2,2',6,6'-tetraisopropyldiphenylcarbodiimide |
| 3.2 parts by weight of | a silicone-based foam stabilizer (DC 193 from Dow Corning) |
| 0.9 part by weight of | a mixture of fatty acid polyglycol esters and amine salts of alkyl benzenesulfonates |
| 0.2 part by weight of | a mixture of 30% by weight of pentamethyldiethylenetri-amine and 70% by weight of N-methyl-N'-(dimethylaminoethyl)piperazine |

### 9.3. Production of the cylindrical molding

100 parts by weight of the prepolymer according to (1) were mixed with 3.22 parts by weight of the crosslinking component according to (2) with the aid of a low pressure casting machine at 90°C prepolymer temperature and 50°C crosslinking agent temperature, the mixture was introduced into a closable mold at 85°C (for example having the spring geometry according to Fig. 1) and the foam was cured at 85°C for 20 min. After removal of the microcellular product from the mold the shaped article was thermally postcured for 14 h at 110°C.

### Comparative example 2

### 10.1. Preparation of the prepolymer comprising NCO groups

26.7 parts by weight of 4,4'-diisocyanatodiphenylmethane (Lupranat® MES from BASF SE) were melted under a nitrogen atmosphere in a three-necked flask, and 73.3 parts by weight of polytetrahydrofuran 2000 (hydroxyl number of 56 mg KOH/g, molecular weight 2000 g/mol) were added at 60°C with stirring. The mixture was heated at 90°C for 1.5 hours to complete the reaction and then cooled. A virtually colorless liquid having an NCO content of 5.8% and a viscosity of 1400 mPas at 80°C resulted.

### 10.2. Preparation of the crosslinking component:

cf. example 2 (according to the invention)

### 10.3. Production of the cylindrical molding

100 parts by weight of the prepolymer according to (1) were mixed with 3.24 parts by weight of the crosslinking component according to (2) with the aid of a low pressure casting machine at 80°C prepolymer temperature and 35°C crosslinking agent temperature, the mixture was introduced into a closable mold at 75°C (for example having the spring geometry according to Fig. 1) and the foam was cured at 75°C for 15 min.

On demolding, the spring elements tore in the region of the undercuts, such as, for example, the bending lip. The tears were irreversible and could not be closed even by subsequent thermal postcuring of the shaped articles for 14 h at 110°C. Because of this damage, the shaped articles were not subjected to dynamic testing and the blocks, too, were not investigated with regard to the mechanical characteristics.

### Comparative example 3

### 11.1. Preparation of the prepolymer comprising NCO groups

27.0 parts by weight of 4,4'-diisocyanatodiphenylmethane (Lupranat® MES from BASF SE) were melted under a nitrogen atmosphere in a three-necked flask, and a mixture of 72.9 parts by weight of polytetrahydrofuran 2000 (hydroxyl number of 56 mg KOH/g, molecular weight 2000 g/mol) and 0.1 part by weight of trimethylolpropane was added at 60°C with stirring. The mixture was heated at 90°C for 1.5 hours to complete the reaction and then cooled. A virtually colorless liquid having an NCO content of 5.9% and a viscosity of 1600 mPas at 80°C resulted.

### 11.2. Preparation of the crosslinking component:

cf. example 2 (according to the invention)

### 11.3. Production of the cylindrical molding

100 parts by weight of the prepolymer according to (1) were mixed with 3.30 parts by weight of the crosslinking component according to (2) with the aid of a low pressure casting machine at 80°C prepolymer temperature and 35°C crosslinking agent temperature, the mixture was introduced into a closable mold at 75°C (for example having the spring geometry according to Fig. 1) and the foam was cured at 75°C for 15 min.

As already described in comparative example 2, the shaped articles having an undercut were removed from the mold with irreversible tears. Neither the blocks nor the shaped articles were investigated with regard to their mechanical or dynamic properties.

### Comparative example 4

### 12.1. Preparation of the prepolymer comprising NCO groups

27.3 parts by weight of 4,4'-diisocyanatodiphenylmethane (Lupranat® MES from BASF SE) were melted under a nitrogen atmosphere in a three-necked flask, and a mixture of 72.5 parts by weight of polytetrahydrofuran 2000 (hydroxyl number of 56 mg KOH/g, molecular weight 2000 g/mol) and 0.2 part by weight of trimethylolpropane was added at 60°C with stirring. The mixture was heated at 90°C for 1.5 hours to complete the reaction and then cooled. A virtually colorless liquid having an NCO content of 5.9% and a viscosity of 1800 mPas at 80°C resulted.

### 12.2. Preparation of the crosslinking component:

cf. example 2 (according to the invention)

### 12.3. Production of the cylindrical molding

100 parts by weight of the prepolymer according to (1) were mixed with 3.30 parts by weight of the crosslinking component according to (2) with the aid of a low pressure casting machine at 80°C prepolymer temperature and 35°C crosslinking agent temperature, the mixture was introduced into a closable mold at 75°C (for example having the spring geometry according to Fig. 1) and the foam was cured at 75°C for 15 min.

As already described in comparative example 2, the shaped articles having an undercut were removed from the mold with irreversible tears. Neither the blocks nor the shaped articles were investigated with regard to their mechanical or dynamic properties.

### Test conditions

The moldings were tested with regard to their mechanical and dynamic properties under the conditions described below.

The glass transition temperature was determined according to ISO 6721-7 on S3A tensile test bars made from the finished article with the aid of a torsional vibrator according to the principle of forced vibration. The glass transition temperature was determined at the maximum of the loss modulus G". The samples were cooled to -80°C, kept at this temperature for 5 min and then heated to 40°C at a heating rate of 2 K/min. The measuring frequency was 1 Hz.

The static mechanical properties (the density of the test specimens was 0.5 g/cm³ in each case) were measured on the basis of the tensile strength according to DIN EN ISO 845, of the elongation at break according to DIN EN ISO 1798, of the tear propagation resistance according to DIN ISO 34-1B(b) and of the compression set at 80°C as a modification of DIN EN ISO 1798, using 18 mm high spacers and test specimens having a base area of 40 x 40 mm and a height of 30 ± 1 mm. The test specimens prestressed by 40% were stored for 22 h at 80°C and then left to cool in the prestressed state for 2 h at 23°C. The compression set (CR) was calculated according to the equation $CR = \left[\left({H}_{0}-{H}_{2}\right)/\left({H}_{0}-{H}_{1}\right)\right] ⋅ 100 \left[%\right]$ where
- H₀: is the original height of the test specimen in mm,
- H₁: is the height of the test specimen in the deformed state in mm,
- H₂: is the height of the test specimen after relaxation in mm.

The dynamic mechanical properties of the test specimens were determined on the basis of the permanent deformation. The test specimens consisted of a cylindrical test spring (cf. Fig. 1). The test specimens were subjected to 100 000 load changes with a force of 6 kN and a frequency of 1.2 Hz. The determination of the height H_{R} for determining the permanent deformation after the dynamic test was effected after recording the characteristic of the spring: Hₒ is the starting height. The molding was precompresssed three times with maximum force. The characteristic was then recorded in the 4th cycle. The rate of depression was 50 mm/min. After 10 min, H₁ was determined, i.e. that of the component after recording of the characteristic. Only thereafter did the dynamic test start. After the dynamic mechanical testing of the test specimens the permanent deformation (PD) was determined according to the following equation: $PD = \left[\left({H}_{0}-{H}_{R}\right)/{H}_{0}\right] ⋅ 100 \left[%\right]$ where
H₀ is the original height of the test specimen in mm,
H_{R} is the residual height of the test specimen after the dynamic test, measured after storage for 24 hours at 23°C and 50% relative humidity.

The permanent deformation is a measure of the remaining deformation of the cellular PU elastomer during the continuous vibration test. The smaller this value, the higher is the dynamic efficiency of the material. The dynamic tests were effected while cooling with a fan in an air-conditioned room at 23°C and 50% relative humidity.

The low-temperature characteristic of the cylindrical test spring (cf. Fig. 1) was recorded without precompression in a conditioned chamber at -40°C. The rate of depression was 50 mm/min. The longer the distance covered at the force of 6 kN (= spring deflection), the softer is the spring and the higher its low-temperature flexibility.

The testing of the microbe resistance is effected on the basis of ISO 846, method D, 1997 edition, on spring elements (cf. Fig. 1) with the aid of a burying test. The spring elements to be investigated were prestressed to half the starting height in a clamping apparatus and then stored for 6 weeks at 28°C in biologically active earth (moisture is adjusted to 60% of the maximum water capacity). If no substantial change (e.g. tearing/decomposition) is observed, the foam material is resistant to microbes.

The table below summarizes the material properties of the cellular elastomers according to the invention (examples 1 to 8) and of the comparative foams (comparative examples 1 to 3).

The moldings produced according to examples 1 to 8 according to the invention (cf. Fig. 1) could be removed from the mold without tearing after a uniform curing time of 15 minutes. In comparison, the moldings of comparative examples 2, 3 and 4 tore in the region of strong undercuts, in particular in the region of the bending lip. Since the torn moldings were not investigated further, no material data are stated for these examples.

The cellular polyurethane elastomers according to the invention have a high mechanical property level (cf. tensile strength, elongation at break, tear propagation resistance and in particular compression set at 80°C) and are distinguished by extremely good stability to hydrolysis in a humid warm environment. In contrast, the foam of comparison example 1 having a polyester soft phase hydrolyzed.

Furthermore, the material according to the invention is distinguished by outstanding resistance to microbes.

The low-temperature flexibility was investigated both on complete spring elements by recording of the force-displacement curve at -40°C and on test specimens which were taken from the components. The lower the glass transition temperature and the greater the value for the spring deflection, the better is the low-temperature flexibility. The elastomer foams according to the invention have both low glass transition temperatures and high spring deflections.

The dynamic material properties were determined on the spring element shown in Fig. 1. All spring elements according to the invention underwent the dynamic testing and gave low and therefore advantageous permanent deformations.

Thus, with comparatively low material costs, the foams according to the invention combine a high dynamic property level with stability to hydrolysis and microbe resistance, which permits long use of the material even under unfavorable ambient conditions.

**Table 1: Material properties of the cellular polyurethane elastomers according to the invention (Examples 1 to 8) and of comparative examples 1 to 3**

| | | Unit | | 1 | 2 | 3 | 4 | 5 | Measurement | |
|---|---|---|---|---|---|---|---|---|---|---|
| Prepolymer NCO | | [%] | | 5.7 | 5.7 | 5.8 | 6.0 | 5.9 | | |
| *Soft phase polyols:* | | | | | | | | | | |
| Polytetrahydrofuran 2000 | | [% by weight] | | 80 | 75 | 90 | 84 | 86 | | |
| Polytetrahydrofuran 1800 | | | | - | - | - | - | - | | |
| Polytetrahydrofuran 1000 | | | | 20 | 19 | 10 | 9 | 9 | | |
| Polypropylene oxide (M: 2000) | | | | - | - | - | - | - | | |
| Polyether alcohol (M: 5200) | | | | - | 6 | - | 7 | 5 | | |
| Poly(ethylenebutylene adipate) | | | | - | - | - | - | - | | |
| Damage to the molding (cf. Fig. 1) | | | | none | none | none | none | none | | |
| Static mechanical properties: | | | | | | | | | | |
| Component density | | [kg/m³] | | 420 | 440 | 440 | 440 | | DIN EN ISO 845 | |
| Tensile strength | | [mPa] | | 5 | 5 | 5 | 5 | | DIN EN ISO 1798 | |
| Elongation at break | | [%] | | 480 | 460 | 460 | 400 | | DIN EN ISO 1798 | |
| Tear propagation resistance | | [N/mm] | | 17 | 16 | 18 | 16 | | DIN ISO 34-1B(b) | |
| Permanent deformation (40% deformation, 22h 80°C+2 h 23°C) | | [%] | | 20 | 25 | 23 | 23 | | DIN EN ISO 1856 | |
| Permanent deformation (40% deformation, 22h **70**°C) | | [%] | | 5 | 5 | 5 | 4 | | DIN EN ISO 1856 | |
| Decrease in tensile strength in a humid warm environment (resistance to hydrolysis): | | | | | | | | | | |
| Relative decrease in tensile strength in a humid warm environment***⁾ after a storage time of several days (d) | | | [%] | 0 d | 100 | 100 | | | 100 | DIN EN ISO 1798 |
| | | | | 7d | 112 | 96 | | | 98 | |
| | | | | 14 d | 124 | 93 | | | 95 | |
| | | | | 21 d | 99 | 90 | | | 93 | |
| | | | | 42 d | 91 | 77 | | | 73 | |
| | | | | 56 d | 85 | 71 | | | 64 | |
| | | | | 70 d | 76 | 70 | | | 64 | |
| | | | | 80 d | 69 | 70 | | | 58 | |
| Microbe resistance: | | | | | | | | | | Based on ISO 846; see below Test conditions |
| (+) resistant / (-) not resistant | | | | | (+) | (+) | (+) | (+) | (+) | |
| Low-temperature flexibility | | | | | | | | | | |
| Glass transition temperature (max. loss modulus G"max) | | | [°C] | | -61 | -62 | | | | ISO 6721-7 |
| Spring deflection (for spring. cf. Fig. 1) at 6 kN at -40°C | | | [mm] | | 55 | 55 | 54 | 54 | 53 | see below Test conditions |
| Dynamic mechanical properties: | | | | | | | | | | |
| Permanent deformation***⁾ of a spring (cf. Fig. 1) | | | [%] | | 11 | 9 | 10 | 8 | 11 | Test conditions ****⁾ |

| | Unit | | 6 | 7 | 8 | Comp. 1 | Comp. 2 | Comp. 3 | Measurement | |
|---|---|---|---|---|---|---|---|---|---|---|
| Prepolymer NCO | [%] | | 5.7 | 5.8 | 5.8 | 6.0 | 5.8 | 5.9 | | |

| *Soft phase polyols:* | | | | | | | | | | |
|---|---|---|---|---|---|---|---|---|---|---|
| Polytetrahydrofuran M∼2000 | [% by | | 66 | 75 | 74 | - | 100 | 100 | | |
| Polytetrahydrofuran M∼1800 | weight] | | 9 | - | - | - | - | - | | |
| Polytetrahydrofuran M∼1000 | | | 19 | - | - | - | - | - | | |
| Polypropylene oxide M∼2000 | | | - | 19 | 18 | - | - | - | | |
| Polyether alcohol M∼5200 | | | 6 | 6 | 8 | - | - | - | | |
| Poly(ethylenebutylene adipate) | | | - | - | - | 100 | - | - | | |
| Damage to the demolded spring element (cf. Fig. 1) | | | none | none | none | none | tears | tears | | |

| Static mechanical properties: | | | | | | | | | | |
|---|---|---|---|---|---|---|---|---|---|---|
| Component density | [kg/m³] | | 440 | | 380 | 490 | n.m.**⁾ | n.m.**⁾ | DIN EN ISO 845 | |
| Tensile strength | [mPa] | | 4 | | 3 | 3 | n.m.**⁾ | n.m.**⁾ | DIN EN ISO 1798 | |
| Elongation at break | [%] | | 510 | | 400 | 500 | n.m.**⁾ | n.m.**⁾ | DIN EN ISO 1798 | |
| Propagation resistance | [N/mm] | | 17 | | 13 | 16 | n.m.**⁾ | n.m.**⁾ | DIN ISO 34-1B(b) | |
| Permanent deformation (40% deformation, 22h 80°C+2 h 23°C) | [%] | | 28 | | 12 | 35 | n.m.**⁾ | n.m.**⁾ | | |
| Permanent deformation (40% deformation, 22h 70°C+2 h 23°C) | [%] | | n.m.**) | | 3 | 6 | n.m.**⁾ | n.m.**⁾ | DIN EN ISO 1856 | |
| Decrease in tensile strength in a humid warm environment (stability to hydrolysis): | | | | | | | | | | |
| Relative decrease in tensile strength in a humid warm environment***⁾ after a storage time of several days (d) | | [%] | 0 d | | | | 100 | n.m.**) | n.m.**) | DIN EN ISO 1798 |
| | | | 7 d | | | | 82 | n.m.**) | n.m.**) | |
| | | | 14 d | | | | 55 | n.m.**) | n.m.**) | |
| | | | 21 d | | | | 39 | n.m.**⁾ | n.m.**⁾ | |
| | | | 42 d | | | | < 10 | n.m.**⁾ | n.m.**) | |
| | | | 56 d | | | | destroyed | n.m.**⁾ | n.m.**) | |
| | | | 70 d | | | | destroyed | n.m.**⁾ | n.m.**) | |
| | | | 80 d | | | | destroyed | n.m.**⁾ | n.m.**) | |
| Microbe resistance: (+) resistant / (-) not resistant | | | | (+) | (+) | (+) | (-) | n.m.**) | n.m.**) | Based on ISO 846; see below Test conditions |
| Low-temperature flexibility: Glass transition temperature (max. loss modulus G"max) | | [°C] | | 54 | 53 | 54 | -32 | n.m.**) | n.m.**) | ISO 6721-7 |
| Spring deflection (for spring, cf. Fig. 1) at 6 kN at -40°C | | | | | | | 53 | n.m.**) | n.m.**) | |
| Dynamic mechanical properties: Permanent deformation ****⁾ of a spring (cf. Fig. 1) | | [%] | | | | 9 | 11 | n.m.**) | n.m.**) | Test conditions ****⁾ |

| | | | | | | | | | | |
|---|---|---|---|---|---|---|---|---|---|---|
| **) n.m. = not measured **) Storage of tensile strength test specimens in demineralized water thermostatted at 80°C for a period of up to 80 days. Test specimens removed were cooled at 23°C for 30 min, and the tensile strength according to DIN EN ISO 1798 was then determined. ***) Dynamic test conditions: load 6 kN; frequency 1.2 Hz; number of load changes after 100 000 cycles; fan cooling; the percentage permanent deformation (PD) is obtained from the percentage ratio of the residual height of the spring after the test (H_{R}) to the starting height of the spring H₀ before the test: PD = [(H₀-HR)/H₀]·100[%] | | | | | | | | | | |

## Claims

1. The method for producing a shaped body comprising a polyurethane elastomer, comprising the steps - least min (i) to (v)
(i) providing a mixture (M1), comprising
(a) at least one prepolymer having isocyanate groups, wherein the prepolymer is obtained by reacting a polyol composition (ZP) and an isocyanate composition (ZI) comprising at least 1, 5-naphthalene diisocyanate (NDI) and 4.4' - diphenylmethane diisocyanate (MDI),
(b) at least one chain extender (KV);
(ii) the introduction of the mixture (M1) into a mold;
(iii) heating the mixture (M1) in the mold to a temperature in the range of 140°C to 200°C to obtain one shaped body (F1);
(iv) deforming the molded article (F1) to obtain a molded body precursor (V2);
(v) treating the shaped body precursor (V2) at a temperature ranging from 170 °C to 235°C to obtain a molding (F2) comprising a polyurethane elastomer.

2. Method according to claim 1, wherein the isocyanate composition (ZI) comprises 1, 5-naphthalene diisocyanate (NDI) and 4.4'-diphenylmethane diisocyanate (MDI) in a ratio of 1 to 1 to 1 to 10.

3. Method according to claim 1 or 2, wherein the shaped body precursor (V2) according to step (v) is treated at a pressure in the range of 1 bar to 10 bar for a period of 1 to 48 hours.

4. Method according to any one of claims 1 to 3, wherein the shaped body precursor (V2) is treated at a temperature between 170°C and 210°C.

5. Method according to any one of claims 1 to 4, wherein the mixture (M1) includes at least one further component selected from the group consisting of polyol, foaming agent, water, chain extender, cross-linking agent, catalyst, other auxiliary, and additives or is a mixture thereof.

6. Method according to any one of claims 1 to 5, wherein the isocyanate composition (ZI) further comprises an isocyanate selected from p-phenyl diisocyanate (PPDI) and o- toluidine diisocyanate(TODI), or a mixtures thereof.

7. Method according to any one of claims 1 to 6, wherein the chain extender (KV) is selected from the group consisting of water, diols, triols, diamines, all having a molecular weight between 50 g/mol and 499 g/mol, or mixtures thereof.

8. Shaped articles, obtainable or obtained by a method comprising at least one of the steps (i) to (v):
(i) providing a mixture (M1), comprising
(a) at least one prepolymer having isocyanate groups, wherein the prepolymer is obtained by reacting a polyol composition (ZP) and an isocyanate composition (ZI) comprising at least 1, 5-naphthalene diisocyanate (NDI) and 4.4' - diphenylmethane diisocyanate (MDI),
(b) at least one chain extender (KV);
(ii) the introduction of the mixture (M1) into a mold;
(iii) heating the mixture (M1) in the mold to a temperature in the range between 140°C to 200°C to obtain one shaped body (F1);
(iv) forming the molded article (F1) to obtain a molded body precursor (V2)
(v) treating the formed body precursor (V2) at a temperature between 170 °C and 210°C to give a shaped body (F2) comprising a polyurethane elastomer.

9. Use of a molded article obtained or is obtained according to a method according to any one of claims 1 to 7 or a shaped body according to claim 8 as damping element, buffer, or shock absorber, as part of a shoe or shoe sole.
